# EUROPÄISCHE PATENTSCHRIFT

(11) **EP 3 321 301 B1**
(45) Veröffentlichungstag und Bekanntmachung des Hinweises auf die Patenterteilung: **30.12.2020**
(21) Anmeldenummer: 17201237.9
(22) Anmeldetag: 13.11.2017
(51) Int. Cl.: C08G 18/70, C09D 163/00, C09D 175/04, B05D 7/00

(54) **SYSTEM-ERZEUGNIS UND VERFAHREN ZUM REINIGEN, SANFTEN SANIEREN, STABILISIEREN UND SCHUTZBEHANDELN VON MIKROPORÖSEN BODENMATERIALIEN**
SYSTEM PRODUCT AND METHOD FOR CLEANING, GENTLY REHABILITATING, STABILIZING AND PROTECTING MICROPOROUS FLOOR MATERIALS
SYSTÈME ET PROCÉDÉ POUR NETTOYER, RÉHABILITER, STABILISER ET PROTÉGER DES MATÉRIAUX DE SOL MICROPOREUX

(30) Priorität: 14.11.2016 CH 15052016
(43) Veröffentlichungstag der Anmeldung: 16.05.2018
(73) Patentinhaber: Ringer, Danièle Barbara, 8700 Küsnacht (CH)
(72) Erfinder: RINGER, Remo, 8700 Küsnacht (CH); MEIER, Andreas, 4412 Nuglar (CH)
(74) Vertreter: Felber, Josef

(56) Entgegenhaltungen:
- EP-A1- 1 788 050
- EP-A1- 2 826 761
- EP-A1- 3 173 395
- CH-A5- 694 618

## Beschreibung

Hauptsächlich Parkette und Hölzer aller Art, aber auch sonstige Bodenmaterialien wie Linoleum, Kautschuk, Natursteine, Kalksteine, Beton, Anhydrit, Zementspachtel und weitere Bodenmaterialien sind vielerlei Beanspruchungen ausgesetzt und bedürfen daher einer regelmässigen Pflege und eines regelmässigen Unterhalts. Nebst der mechanischen Belastung durch das Betreten der Böden und durch das auf ihnen Umhergehen werden auf ihnen allerlei Möbel abgestellt. Teppiche aller Art werden auf sie gelegt, und das Licht oder gar intensive Sonneneinstrahlung wirkt auf die Böden ein, jedenfalls dort, wo sie nicht bedeckt sind. Dazu kommen Belastungen infolge von Missgeschicken, indem etwa Dinge auf den Boden fallengelassen werden, was im schlimmsten Fall Einschläge (Hicke *(schweizerisch)* bzw. Kerben), Dellen und Vertiefungen verursachen kann. Oder es werden versehentlich Flüssigkeiten auf dem Boden verschüttet. Dabei kann es sich um wässerige Flüssigkeiten handeln, wobei die Palette von Rotwein, Randensaft, über agressive Lösungsmittel, diverse Chemikalien und Säuren, Farben und Lacken aller Art bis hin zu Urin reicht. Auch ölige Flüssigkeiten werden zuweilen verschüttet, etwa Salatöle, Schmierfette und -öle oder ölige Farben. In Altersheimen und Spitälern werden die Böden mit einiger Regelmässigkeit mit Erbrochenem, Urin, Kot und Blut verschmutzt. Viele solche Substanzen zeigen die Eigenschaft, rasch durch die Mikroporositäten des Bodenmaterials in dieses einzudringen und von ihm absorbiert zu werden. Eine anschliessende Reinigung kann letztlich nur oberflächlich bleiben. Restpartikel verbleiben unerreichbar im Bodenmaterial haften und in diesem Fall können entsprechende Flecken oft nicht gänzlich zum Verschwinden gebracht werden, es sei denn, man bearbeite den Boden mechanisch.

Poröse Bodenmaterialien eignen sich daher gerade für Spitäler oder Heime aller Art nicht, weil erstens die Pflege solcher Böden besonders aufwändig ist, und weil sie sich wegen ihrer Porosität aus obengenannten Gründen eh nicht eignen. Aus diesem Grund werden bisher keine Parkette in Spitälern verbaut, und in Altersheimen selten.

Der Laie stellt sich kaum vor, wie aufwändig die Pflege der Böden von Gebäuden, namentlich von grossen öffentlichen oder privaten Gebäuden ausfällt, vor allem wenn man es von der Kostenseite her betrachtet, und diese über die Lebensdauer eines derartigen Gebäudes, zum Beispiel eines Verwaltungsgebäudes, eines Bürogebäudes, einer Schule, eines Heims oder eines Krankenhauses summiert. Bodenflächen machen nämlich in Bezug auf Unterhalt, Reparatur, Ersatz und Betrieb den zweitgrössten Budgetposten in der Jahresrechnung der Gebäude-Betriebskosten aus. Allein die Reinigung und Instandhaltung schlägt mit mehr als 20% der Lebenszykluskosten zu Buche, und wenn gereinigt wird, so werden vor allem die Böden regelmässig gereinigt, ab und zu auch die Fenster. Der grösste Posten betrifft die Haustechnik. Die Lebenszykluskosten sind dabei, gerechnet über die Nutzungsdauer eines Gebäudes, wesentlich höher als die Erstellungskosten. (Quelle: LUKRETIA - Lebenszykluskosten - Technisierung - Ressourcen, ein Untersuchungsbericht mit dem Thema Nachhaltige Stadt Zürich - auf dem Weg zur 2000 Watt Gesellschaft, 11/2009, herausgegeben vom Amt für Hochbauten, Immobilienbewirtschaftung, Liegenschaftenverwaltung der Stadt Zürich, 11/2009).

In den Marktsegmenten Spitäler/Kliniken, Alterszentren und Bildungsgebäude sind Bodenflächen sehr stark beansprucht und sollten daher eine ganze Reihe von Anforderungen erfüllen, welche aber die einzelnen Bodenmaterialien, bzw. die konventionellen Schutzsysteme nicht umfassend und vollständig erfüllen können. Daher entstehen durch aufwändige Unterhaltsarbeiten wie Reinigung, Nacharbeiten, Malheur-Behebungen und Ersatzarbeiten hohe Betriebskosten. Diese machen also den zweitgrössten Kostenfaktor im Gebäudeunterhalt aus. Ebenso ist die notwendige Prozesssicherheit, in Spitälern etwa die Hygiene, nur teilweise gewährleistet.

Für Böden gibt es zahlreichen Anforderungen, je nach dem Typ und Gebrauchszwecks des Gebäudes, in welches der Boden eingebaut werden soll. Einige der Anforderungen sind diese:
- Definierte Rutschsicherheit
- Definiertes Brandverhalten
- Hohe Beständigkeit gegen Tausalze und Chemikalien
- Hohe Fleckensicherheit gegen Essen, Getränke, Urin, Fäkalien und Körperflüssigkeiten
- Hohe Farb-, UV-, Abrieb- und Formstabilität
- Einfache und sichere Desinfektion / Dekontamination
- Verhinderung von allergischen Reaktionen
- Möglichst einfache, sichere Unterhaltsreinigung
- Möglichst wenige Erhalts- und Zusatzaufwendungen
- Möglichst lange Einsatzfähigkeit / Lebensdauer / Garantie Auf konventionelle Art und Weise können diese Anforderungen oftmals nur lückenhaft erfüllt werden.

Trotz der bekannten Dauerhaftigkeit und Strapazierfähigkeit besteht in Fachkreisen der Wunsch, poröse Baustoffe, die der Benutzung im Objektbereich oder gar aggressiven Reinigungsmitteln ausgesetzt sind, mit einer Schutzbehandlung zusätzlich zu schützen. Der versiegelnde Überzug bietet ökologische sowie ökonomische Vorteile. Bis zum heutigen Zeitpunkt werden poröse Baustoffe gemäss allgemeiner Lehrmeinung durch Auftragen von konventionellen Polyurethanen, Acrylaten, Wachsen und Ölen hinreichend geschützt und gepflegt. Die konventionellen Polyurethane und Acrylate werden meist in zwei bis drei Anstrichen sparsam mit ca. 150gr./m² pro Anstrich mittels Roller gleichmässig in Bahnen verteilt aufgetragen. Eine trockenfilmstarke Grundierung aus Acrylatbasis vor dem Versiegeln ist unbedingt nötig. Wachse und Öle werden meist in 2 bis 3 Anstrichen ebenfalls sparsam mit ca. 150gr./m² pro Anstrich mittels Rolle oder Anstreichgerät gleichmässig in Bahnen verteilt aufgetragen. Die erzielten Schutzfilme sind temporärer Art und müssen halbjährlich erneut appliziert werden. Der Nachteil dieser Verfahren ist, dass die Behandlung den hohen Anforderungen in bestimmten Objekten, in denen hohe Ansprüche an die Hygiene, Desinfektionsfähigkeit und Strapazierfähigkeit der Böden gestellt werden, nicht gerecht wird. Gemäss der allgemeinen Lehrmeinung gibt es aber bisher keine Lösungen zum dauerhaften Schutz von Oberflächen aus Holz oder porösen mineralischen Materialien oder Kunststoffen, sodass dieser Schutz hohe hygienische Ansprüche erfüllt.

Systeme zur Schutzbehandlung von Bodenmaterialien sind zum Beispiel aus CH694618, EP1788050 und EP2826761 bekannt.

Die Aufgabe der vorliegenden Erfindung ist es deshalb, hier Abhilfe zu schaffen und ein System-Erzeugnis zum Schutzbehandeln von mineralischen Oberflächen, Kunststoffen mit porösen Oberflächen, mikroporösen Böden und Bodenmaterialien wie Parkett, Hölzer aller Art, Linoleum, Gummi/Kautschuk, PVC, Polyurethan, Epoxid, Natursteine, Kalksteine, Beton, Anhydrit, Zementspachtel und andere zu schaffen, welches durch eine fachgerechte Applikation alle Anforderungen erfüllt und den Aufwand für die Pflege und den Unterhalt eines Bodens und namentlich eines Bodens aus mikroporösem Bodenmaterial wesentlich zu reduzieren vermag und die nötige Prozess-Sicherheit bietet und insbesondere auch höchste hygienische Ansprüche erfüllt. Eine weitere Aufgabe der Erfindung ist es, das Anwendungsverfahren für dieses System-Erzeugnis bzw. dessen erfindungsgemässe Verwendung, die Erneuerung der Versiegelung sowie die damit schutzbehandelte Oberfläche bzw. den schutzbehandelten Boden und das schutzbehandelte Bodenmaterial anzugeben, damit die erwünschten Ziele auch tatsächlich erreicht werden.

Diese Aufgabe wird gelöst durch ein System-Erzeugnis zum Schutzbehandeln von mineralischen Oberflächen, Kunststoffen mit porösen Oberflächen, mikroporösen Böden und Bodenmaterialien wie Parkett, Hölzer aller Art, Linoleum, Gummi/Kautschuk, PVC, Polyurethan, Epoxid, Natursteine, Kalksteine, Beton, Anhydrit, Zementspachtel und andere, in Form eines wasserverdünnbaren Lacks, bestehend aus wenigstens zwei Bestandteilen A und B mit drei Basis-Komponenten, nämlich aus
- A: einer wasserverdünnbaren 2-Komponenten Epoxygrundierung, und
- B: einer wässerigen Polymerdispersion mit einem pH-Wert zwischen 6 und 9, vernetzt mit einem emulgierbaren Isocyanatharz,
wobei Bestandteil B frei von Polysiloxanen ist.

System-Erzeugnis wird dieses Erzeugnis deswegen genannt, weil es vorliegend mindestens zwei Bestandteile einschliesst, die in zeitlicher Abfolge appliziert werden müssen, um das angestrebte Ergebnis zu erzielen.

Die Aufgabe wird überdies gelöst von einer Verwendung dieses System-Erzeugnisses gemäss Anspruch 6. Ferner löst die Aufgabe ein Verfahren zur Anwendung des System-Erzeugnisses gemäss Anspruch 7 sowie die Erneuerung der Versiegelung gemäss Anspruch 9. Als Lösung der Aufgabe werden zudem eine schutzbehandelte Oberfläche, ein schutzbehandelter Boden und ein schutzbehandeltes Bodenmaterial nach Anspruch 10 angegeben.

Das System-Erzeugnis und das Verfahren zu seiner Applikation werden im Folgenden näher beschrieben und die technischen sowie die sich daraus ergebenden wirtschaftlichen Vorteile werden erläutert. In der Figur wird die chemische Zusammensetzung der Komponenten des System-Erzeugnisses dargestellt, und es werden auch die verschiedenen Zusätze angegeben.

Es zeigt:
- Figur 1 :: die chemische Formel für die Kunststoffdispersion in Wasser;
- Figur 2 :: die chemische Formel für die Polyisocyanat-Komponente;
- Figur 3 :: die Bestandteile der Epoxyharzgrundierung.

Das System-Erzeugnis umfasst wie oben erwähnt wenigstens zwei Bestandteile mit insgesamt drei Basis-Komponenten, nämlich Bestandteil B, einer Kunststoff-Dispersion in Form einer wässerigen Polymerdispersion mit einem pH-Wert zwischen 6 und 9, und einem emulgierbaren Isocyanatharz, sowie Bestandteil A, einer wasserverdünnbaren Zwei-Komponenten Epoxygrundierung. Bestandteil B des System-Erzeugnisses liegt als wasserverdünnbarer Lack vor.

Im Einzelnen wird nachfolgend ein derartiges System-Erzeugnis anhand einer spezifischeren Rezeptur angegeben, wie sich das Erzeugnis für die genannten Anwendungszwecke besonders eignet: Danach besteht die wässerige Polymerdispersion aus
90 bis 40 Gewichtsprozenten Wasser,
5 bis 40 Gewichtsprozenten Polymere,
1 bis 40 Gewichtsprozenten Additive.

Die zweite Komponente, das emulgierbare Isocyanatharz, ist vorzugsweise zusammengesetzt aus
5 bis 100 Gewichtsprozenten Polyisocyanate, und
5 bis 100 Gewichtsprozenten Co-Löser,
während die Epoxygrundierung aus den beiden Komponenten Bisphenol-Epichlorhydrinharz und emulgierbarem Polyaminaddukt-Härter besteht, nämlich aus:
5 bis 100 Gewichtsprozenten Polymeren,
5 bis 100 Gewichtsprozenten Co-Lösern,
1 bis 40 Gewichtsprozenten Additiven,
für das Bisphenol-Epichlorhydrinharz, und aus
5 bis 100 Gewichtsprozenten Aminharz,
5 bis 100 Gewichtsprozenten Co-Lösern,
5 bis 100 Gewichtsprozenten Wasser
für den emulgierbaren Polyaminaddukt-Härter.

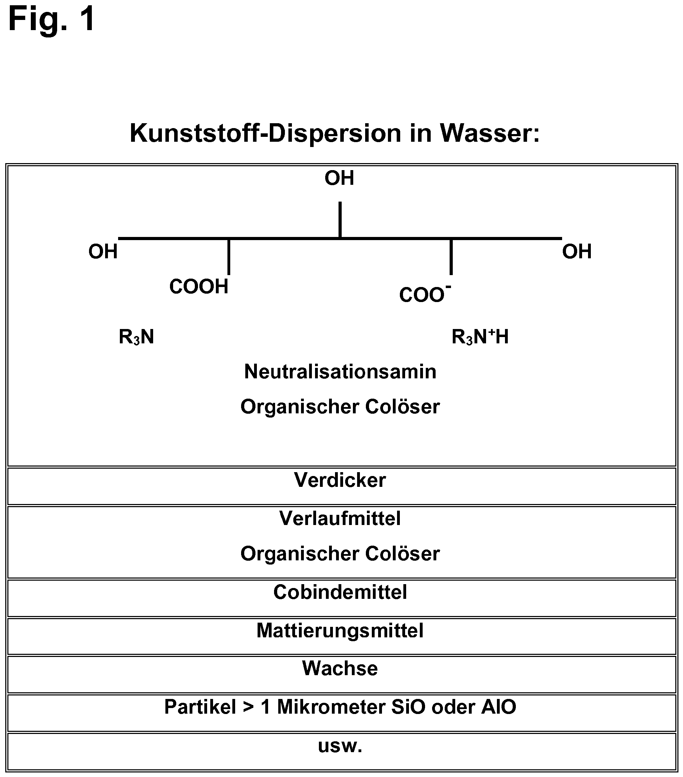

In der Figur 1 ist die chemische Reaktionsformel für die wässerige Polymerdispersion aufgeführt.

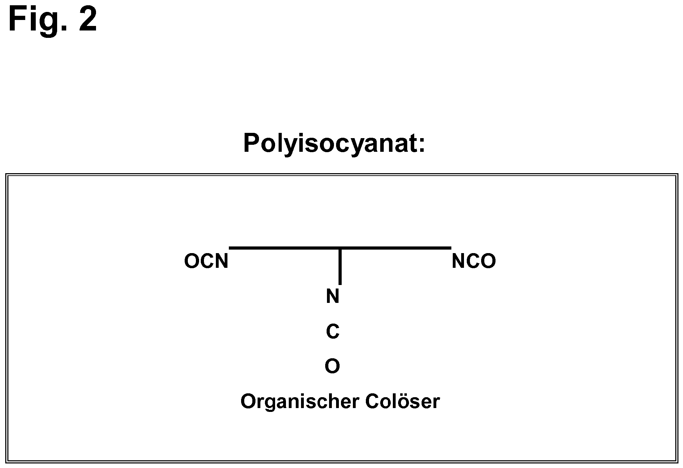

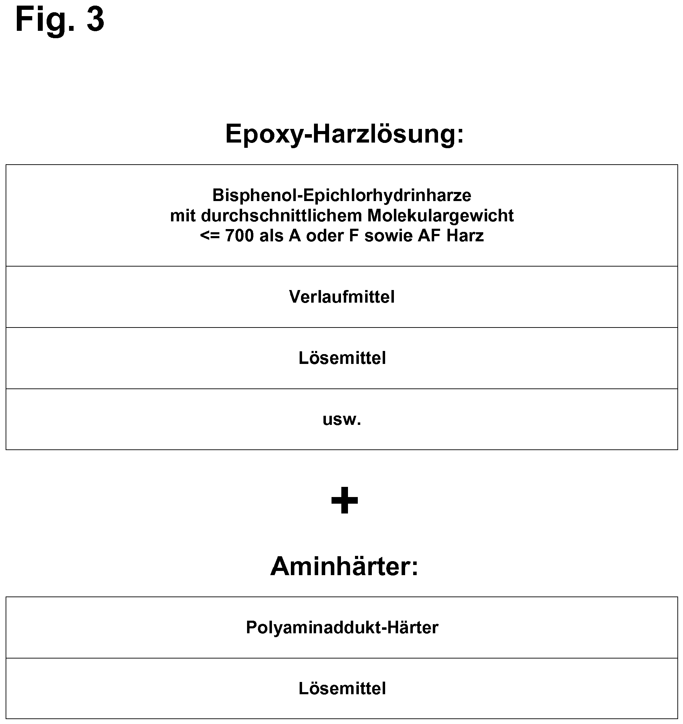

Dieser Dispersion werden noch Verdicker sowie ein Verlaufmittel - damit der fertige Lack auf den Boden appliziert schön gleichmässig verläuft - sowie organische Co-Löser und Co-Bindemittel beigemengt. Je nach Bedarf können Mattierungsmittel zugeschlagen werden, wenn der fertige Lack matt erscheinen soll, also nicht glänzend. In Figur 2 ist die chemische Formel für die Polyisocyanat-Komponente dargestellt. Und die Figur 3 listet die optimalen weiteren Bestandteile des System-Erzeugnisses auf, als Bestandteile der Epoxyharzgrundierung.

Zum Einstellen des pH-Wertes der wässerigen Polymerdispersion zwischen vorzugsweise 6.0 bis 9.0 werden allfällig überschüssige Säuregruppen mit Alkalihydroxid, Ammoniakhydroxid oder Aminen neutralisiert. Je nach Bedarf können weitere Zusatzstoffe dem System-Erzeugnis für verschiedene Zwecke zugeschlagen werden.

Die Polymerdispersion kann eine Polyoldispersion enthalten und Co-Bindemittel in Form von reaktiven und nicht reaktiven Polymerdispersionen. Additive dienen zur Verlaufsförderung und zur Viskositätsstabilisierung, damit das in Form eines Lackes vorliegende System-Erzeugnis in Form einer gleichbleibenden stabilen Verarbeitungsflüssigkeit vorliegt. Weiter dienen Additive zur Entschäumung bzw. zur Unterdrückung einer Schaumbildung, welche einer Verarbeitung hinderlich wäre. In der Polymerdispersion und dem Isocyanatharz können Co-Löser zur Stabilisierung des Lacksystems eingebaut sein. Wachszusätze schliesslich dienen der Verbesserung der Abriebfestigkeit, damit der Boden letztlich strapazierfähig ist und bleibt.

Insgesamt bietet sich eine ganze Palette von Zusatzstoffen an, die je nach Bedarf bzw. je nach Bodentyp in grösserer oder kleinerer Menge zugesetzt sein können, und dies aus einer Auswahl folgender Zusatzstoffe:
- Mattierungsmittel zur Mattierung des versiegelten Bodens, falls ein matter Boden gewünscht wird und nicht ein glänzender,
- UV-Absorber zum Schutz des Überzuges und des Untergrundes, damit der UV-Anteil des Sonnenlichtes den Boden nicht farblich mit der Zeit verändert,
- Hydrophobe sowie hydrophile Polyisocyanate im emulgierbaren Isocyanatharz,
- Partikel von < 1 Mikrometer als SiO oder AIO in der wässerigen Polymerdispersion, zur Gesamtfestigkeit und Stabilisierung des System-Erzeugnisses,
- Emulgierbare Aminhärter im emulgierbaren Polyaminaddukt-Härter.

Bevor dieses System-Erzeugnis auf einen Boden als Beschichtung und Versiegelung aufgetragen wird, bedarf es hochwichtiger Vorbereitungsarbeiten, die genau nach Reihenfolge vorzunehmen sind, egal ob der zu behandelnde Boden alt oder neu ist und egal, ob es sich bei diesem mikroporösen Boden um einen Boden aus Parkett, aus Hölzern aller Art, aus Linoleum, Gummi/Kautschuk, PVC, Polyurethan, Epoxid, aus Natursteinen, Kalksteinen, Beton, Anhydrit oder aus Zementspachtel handelt, oder ob er aus noch anderen mikroporösen Materialien besteht. Die Mikroporosität ist jedoch in jedem Fall entscheidend, damit das System-Erzeugnis sich innig mit dem Boden verbinden und quasi verkrallen kann. Zunächst muss der Boden gründlich gereinigt werden. Hierzu können handelsübliche Reinigungsmittel und Techniken eingesetzt werden. Hernach wird der Boden als verfahrensspezifischer und wichtiger Schritt plangeschliffen. Dazu können handelsübliche Schleifmittel und Maschinen eingesetzt werden. Dieser Arbeitsschritt ist hoch wichtig und dient zum Öffnen der Material-Oberflächen und damit zum Wiederherstellen der Mikroporosität des Bodenmaterials, was vor allem bei alten und bereits ein- oder mehrmalig versiegelten Böden unabdingbar ist, damit diese wieder mikroporös werden. Dabei werden auch alle Fremdpartikel aus dem Oberflächenmaterial des Bodens gründlich und vollständig entfernt. Hernach erfolgt als nächster Arbeitsschritt verfahrensgemäss ein Konditionieren des Bodens durch Grundieren mittels eines speziellen Primers, nämlich mit dem Bestandteil A, wodurch das Produkt in das Bodenmaterial eindringt und ein Netzwerk von Andockpunkten für das chemische Anbinden des anschliessend aufzutragenden Bestandteils B bzw. Lackes erfolgen kann. Als nächster Verfahrensschritt erfolgt das Stabilisieren des Bodens mittels Auftragen des Bestandteils B, der in Form eines Lackes vorliegt, durch Rollen oder Streichen. Der Lack dringt damit in das Bodenmaterial ein und verbindet sich chemisch mit demselben, und die einzelnen Substratpartikel des Bodenmaterials werden von ihm umhüllt. Damit wird ein dauerelastisches, stabiles Mikronetzwerk erstellt. Im Fall von Parkett sind die Substratpartikel Zellulosefasern. Bei anderen Böden können es zum Beispiel Kautschukpartikel sein, oder Linoleum-Partikel. Letztlich geht es stets um die Partikel, aus denen ein spezifisches Bodenmaterial besteht. Ein dauerelastisches, stabiles Mikronetzwerk ist die entscheidende Grundvoraussetzung, damit eine darauf zu applizierende Beschichtung gleich welcher Art überhaupt dauerhaft haften kann. Vorzugsweise und verfahrensgemäss wird jetzt eine Schutzschicht durch Aufbringen einer weiteren Schicht des Bestandteils B, d.h. des Lackes, durch ein- oder mehrmaliges Auftragen desselben durch Rollen oder Streichen auf dem Boden erstellt. Der Lack verbindet sich dabei chemisch mit dem stabilisierten Boden, indem die noch freien Substratpartikel umhüllt werden, wodurch das dauerelastische Netzwerk ergänzt wird und eine dauerelastische Dünnschicht auf der Materialoberfläche erzeugt wird.

Dieses Versiegelungssystem bietet einen gleichmässigen und strapazierbaren Schutzfilm auf dem Boden, der die Anforderungen an Hygiene, Desinfektionsfähigkeit und Strapazierfähigkeit vollumfänglich erfüllt und welcher in ökonomischer Hinsicht wesentliche Einsparungen wegen seiner ausgesprochenen Pflegeleichtigkeit bietet. Der Fachmann kann mit der Erfindung eine gleichmässige, streifenfreie, schnelltrocknende, blasenfreie Versiegelung applizieren. Die Lebensdauer einer solchen Versiegelung liegt bei 5 bis 20 Jahren. Die Erneuerung erfolgt durch Anschleifen oder Abschleifen der alten Schutzschicht und dem verfahrensgemässen Neuauftrag des Bestandteils B bzw. des aus A und B bestehenden Systemaufbaus. Der Schutzfilm verhält sich gegenüber physikalischen und chemischen Einwirkungen hoch resistent und ist nach Applikation innert 6 Stunden trocken und nach vollständiger Durchhärtung belastbar. Das Eindringen der Systembestandteile in die Materialien bzw. das Auflegen einer Dünnschicht ermöglichen den Erhalt der Schutzfunktionen des behandelten Bodens auch bei oberflächlicher mechanischer Beanspruchung. Das dauerelastische Netzwerk ermöglicht die Aufnahme grösserer Druckkräfte und hält die einzelnen Substratpartikel stabil verbunden. Und bei all dem ist die bauphysikalisch notwendige Wasserdampfdiffusionsfähigkeit über das entstandene, dauerelastische Netzwerk jederzeit gewährleistet.

Dieser erfindungsgemässe Systemaufbau kann zur schützenden Nachbehandlung von Holz und mineralischen Oberflächen eingesetzt werden. Darunter fallen auch die üblichen Parkettoberflächen, welche bereits versiegelt, gewachst oder geölt sind. Auch Kunststoffe mit einer porösen Oberfläche können geschützt werden. Damit behandelte Oberflächen zeigen nach dem Abtrocknen einen gleichmässigen Schutzfilm, der hoher Beanspruchung standhält und der sich als schmutzabweisend, abriebfest, pflegeleicht, vergilbungsfrei und schützend erweist. Besonders erwähnenswert ist die Tatsache, dass die Baustoffe verfestigt werden und dank der hohen erreichten Zugfestigkeit des Bodenbelages eine enorme Güte erreicht wird. Technisch und nach Pflichtenheft erfüllt ein solchermassen behandelter mikroporöser und mit einem solchen Schutzfilm ausgestatteter Boden folgende Anforderungen:
- Rutschsicherheit GS 3 (BFU - Messung) = R 11 - R 12,
- Beständigkeit gegen Tausalz und den betrieblich notwendigen Chemikalieneinsatz,
- sehr hohe Fleckensicherheit gegen Essen, Getränke, Urin, Fäkalien und Körperflüssigkeiten,
- sehr hohe Farb-, UV-, Abrieb- und Formstabilität,
- einfache und sichere Desinfektion / Dekontamination (Mikroorganismen liegen obenauf),
- Verhinderung von allergischen Reaktionen,
- Tauglichkeit für gesundes Innenraumklima, Minergie ECO-P, Leed, Green, DGNB,
- keine Lichtreflexe vom Boden ausgehend (wichtig für Personen mit Sehbehinderung und/oder Demenz),
- wesentlich einfachere und prozesssichere Unterhaltsreinigung,
- keine Aufwendungen für Erhalts-, Zusatz- und Jahresarbeiten,
- 10 Jahre Funktionsgarantie,
- sehr einfache Reversibilität ist gewährleistet, d.h. ein behandelter Boden kann bei Bedarf in seinen Urzustand zurückversetzt werden.

Damit werden alle Eckwerte für stark erhöhte Anforderungen an Bodenflächen erfüllt. Eine Ausstattung selbst eines Spitals oder eines Altersheimes mit Parkett-Böden, bisher kaum denkbar, steht damit nichts mehr im Wege.

Verfahrensgemäss behandeln und mit einer Schutzschicht aus dem vorgestellten System-Erzeugnis versehen lassen sich grundsätzlich alle mikroporösen Bodenmaterialien. Als Resultat wird immer dieselbe Oberflächenperformance erreicht, welche alle Anforderungen an einen prozesssicheren Betrieb vollumfänglich gewährleistet. Die Lebenszyklus-Vollkosten (Mehrinvestitionen und 20 Jahre Betrieb) nach SIA 480 sind klar definiert und können im Vergleich zu konventionellen Schutzsystemen halbiert werden. Die Anwendung des Verfahrens und System-Erzeugnisses führt anfänglich zu höheren Investitionskosten, aber über 20 Jahre gerechnet lassen sich unter dem Strich ca. 50% der Kosten für die Bodenpflege und den Unterhalt der Böden einsparen. Diese Aussagen sind gesichert und lassen sich durch diverse Gutachten belegen.

Das Verfahren und System-Erzeugnis kann auf alle mikroporösen Bodenmaterialien angewendet werden. Die Mehrinvestitionen pro m² gegenüber einer konventionellen Behandlung liegen in der Schweiz bei ca. CHF 30.00 bis CHF 38.00. Die jährlichen wiederkehrenden Einsparungen für Unterhalt, Reparatur und Ersatz liegen pro m² bei ca. CHF 20.00 bis CHF 25.00. Die Amortisationsdauer liegt daher bei 18 - 24 Monaten, das heisst spätestens nach 2 Jahren spart man in den Folgejahren regelmässig erhebliche Kosten ein, und es kann eine Garantiezeit von 10 Jahren geboten werden.

## Patentansprüche

1. System-Erzeugnis zum Schutzbehandeln von mineralischen Oberflächen, Kunststoffen mit porösen Oberflächen, mikroporösen Böden und Bodenmaterialien wie Parkett, Hölzer aller Art, Linoleum, Gummi/Kautschuk, PVC, Polyurethan, Epoxid, Natursteine, Kalksteine, Beton, Anhydrit, Zementspachtel und andere, in Form eines wasserverdünnbaren Lacks, bestehend aus wenigstens zwei Bestandteilen A und B mit drei Basis-Komponenten, nämlich aus
A einer wasserverdünnbaren Zweikomponenten-Epoxygrundierung, sowie
B einer wässerigen Polymerdispersion mit einem pH-Wert zwischen 6 und 9 und einem emulgierbaren Isocyanatharz,
wobei Bestandteil B frei von Polysiloxanen ist.

2. System-Erzeugnis nach Anspruch 1, ***dadurch gekennzeichnet,* dass** die zweikomponentige wasserverdünnbare Epoxygrundierung aus Bisphenol-Epichlorhydrinharz und einem emulgierbaren Polyaminaddukt-Härter zusammengesetzt ist.

3. System-Erzeugnis nach einem der vorangehenden Ansprüche, ***dadurch gekennzeichnet,* dass** der Bestandteil A, nämlich die zweikomponentige wasserverdünnbare Epoxygrundierung, aus den beiden Komponenten Bisphenol-Epichlorhydrinharz und emulgierbarem Polyaminaddukt-Härter wie folgt zusammengesetzt ist:
das Bisphenol-Epichlorhydrinharz aus
5 bis 100 Gewichtsprozenten Polymeren,
5 bis 100 Gewichtsprozenten Co-Lösern,
1 bis 40 Gewichtsprozenten Additiven,
und der emulgierbare Polyaminaddukt-Härter aus
5 bis 100 Gewichtsprozenten Aminharz,
5 bis 100 Gewichtsprozenten Co-Lösern,
5 bis 100 Gewichtsprozenten Wasser,
und dass der Bestanteil B wie folgt zusammengesetzt ist:
die wässerige Polymerdispersion aus
90 bis 40 Gewichtsprozenten Wasser,
5 bis 40 Gewichtsprozenten Polymere,
1 bis 40 Gewichtsprozenten Additive,
und das emulgierbare Isocyanatharz aus
5 bis 100 Gewichtsprozenten Polyisocyanate,
5 bis 100 Gewichtsprozenten Co-Löser.

4. System-Erzeugnis nach einem der vorangehenden Ansprüche, ***dadurch gekennzeichnet,* dass** die Polymerdispersion eine Polyoldispersion enthält und Co-Bindemittel in Form von reaktiven und nicht reaktiven Polymerdispersionen, sowie Additive zur Verlaufsförderung, zur Viskositätsstabilisierung und zur Entschäumung, weiter dass in der Polymerdispersion und dem Isocyanatharz ein Co-Löser zur Stabilisierung des Lacksystems beigegeben ist, sowie Wachszusätze zur Verbesserung der Abriebfestigkeit eingesetzt sind.

5. System-Erzeugnis nach einem der vorangehenden Ansprüche, ***dadurch gekennzeichnet,* dass** zusätzlich einer oder mehrere der folgenden Zusätze enthalten sind:
• Mattierungsmittel zur Mattierung des versiegelten Bodens,
• UV-Absorber zum Schutz des Überzuges und des Untergrundes,
• hydrophobe sowie hydrophile Polyisocyanate im emulgierbaren Isocyanatharz,
• Partikel von <1 Mikrometer als SiO oder AIO in der wässerigen Polymerdispersion, zur Gesamtfestigkeit des Erzeugnisses,
• emulgierbare Aminhärter im emulgierbaren Polyaminaddukt-Härter.

6. Verwendung eines System-Erzeugnisses nach einem der vorangehenden Ansprüche zum Schutzbehandeln von mineralischen Oberflächen, Kunststoffen mit porösen Oberflächen, mikroporösen Böden und Bodenmaterialien wie Parkett, Hölzer aller Art, Linoleum, Gummi/Kautschuk, PVC, Polyurethan, Epoxid, Natursteine, Kalksteine, Beton, Anhydrit, Zementspachtel und andere.

7. Verfahren zum sanften Sanieren, Stabilisieren und Schutzbehandeln von mineralischen Oberflächen, Kunststoffen mit porösen Oberflächen, mikroporösen Böden und Bodenmaterialien wie Parkett, Hölzer aller Art, Linoleum, Gummi/Kautschuk, PVC, Polyurethan, Epoxid, Natursteine, Kalksteine, Beton, Anhydrit, Zementspachtel und andere, bei dem nach dem Reinigen der zu behandelnden Oberfläche, des Bodens oder der Bodenmaterialien mittels handelsüblicher Reinigungsmittel und Techniken ein System-Erzeugnis nach einem der vorangehenden Ansprüche mit folgenden Schritten appliziert wird:
a) Planschleifen der Oberfläche, des Bodens oder des Bodenmaterials mittels Schleifmittel und Maschinen zum Öffnen der Material-Oberflächen und damit Wiederherstellen der Mikroporosität sowie zum möglichst umfassenden Entfernen von Fremdpartikeln aus dem zu behandelnden Oberflächenmaterial,
b) Konditionieren der Oberfläche, des Bodens oder des Bodenmaterials durch Grundieren mittels des Bestandteils A des System-Erzeugnisses, wodurch dieser Bestandteil A in das Oberflächenmaterial, den Boden oder das Bodenmaterial eindringt und ein Netzwerk von Andockpunkten für das chemische Anbinden des anschliessend aufzutragenden Bestandteils B des System-Erzeugnisses bildet,
c) Stabilisieren der Oberfläche, des Bodens oder des Bodenmaterials mittels Auftragen durch Rollen oder Streichen des Bestandteils B des System-Erzeugnisses, welcher Bestandteil damit in das Oberflächenmaterial, den Boden oder das Bodenmaterial eindringt und sich chemisch mit demselben verbindet und dessen einzelne Substratpartikel umhüllt und damit ein dauerelastisches Mikronetzwerk erstellt.

8. Verfahren nach Anspruch 7, ***dadurch gekennzeichnet,* dass** anschliessend folgender Schritt angewandt wird:
d) Schutzbehandeln der Oberfläche, des Bodens oder des Bodenmaterials mittels ein- oder mehrmaligem Auftragen durch Rollen oder Streichen des Bestandteils B des System-Erzeugnisses, welcher Bestandteil sich chemisch mit der stabilisierten Oberfläche, dem stabilisierten Boden oder Bodenmaterial verbindet, durch Umhüllung der restlichen freien Substratpartikel, wodurch das dauerelastische Netzwerk ergänzt wird und eine dauerelastische Dünnschicht auf der Materialoberfläche erzeugt wird.

9. Verfahren zum Erneuern einer nach Anspruch 7 oder 8 geschaffenen Versiegelung durch Anschleifen der alten Schutzschicht und dem verfahrensgemässen Neuauftrag des Bestandteils B.

10. Mit dem Verfahren nach einem der Ansprüche 7 bis 9 schutzbehandelte Oberfläche, schutzbehandelter Boden oder schutzbehandeltes Bodenmaterial.

## Claims

1. System product for the protective treatment of mineral surfaces, plastics with porous surfaces, microporous floors and floor materials, i.e. floors and floor materials with pores in the micrometer range, such as parquet, wood of all kinds, linoleum, rubber/rubber, PVC, polyurethane, epoxy, natural stones, limestone, concrete, anhydrite, cement filler and others, in the form of a water-dilutable lacquer, consisting of at least two components A and B with three basic components, namely
A a water-dilutable two-component epoxy primer, and
B of an aqueous polymer dispersion having a pH between 6 and 9 and an emulsifiable isocyanate resin,
where component B is free from polysiloxanes.

2. System product according to claim 1, **characterised in that** the two-component water-dilutable epoxy primer is composed of bisphenol epichlorohydrin resin and an emulsifiable polyamine adduct hardener.

3. System product according to any of the preceding claims, **characterised in that** component A, namely the two-component water-dilutable epoxy primer, is composed of the two components bisphenol-epichlorohydrin resin and emulsifiable polyamine adduct hardener as follows:
the bisphenol-epichlorohydrin resin is composed of
5 to 100 weight percent polymers,
5 to 100 weight percent co-solvents,
1 to 40 weight percent additives,
and the emulsifiable polyamine adduct hardener made from
5 to 100 weight percent amine resin,
5 to 100 weight percent co-solvents,
5 to 100 weight percent water,
and that component B is composed as follows:
the aqueous polymer dispersion consists of
90 to 40 percent by weight of water,
5 to 40 weight percent polymers,
1 to 40 weight percent additives,
and the emulsifiable isocyanate resin from
5 to 100% by weight of polyisocyanates,
5 to 100 weight percent co-solvent.

4. System product according to one of the preceding claims, **characterised in that** the polymer dispersion contains a polyol dispersion and co-binders in the form of reactive and non-reactive polymer dispersions, as well as additives for flow promotion, viscosity stabilisation and defoaming, further that in the polymer dispersion and the isocyanate resin a co-solvent is added to stabilise the paint system, as well as wax additives to improve the abrasion resistance.

5. System product according to one of the preceding claims, **characterized in that** additionally one or more of the following additives are contained:
• Matting agent for matting the sealed floor,
• UV absorber to protect the coating and the substrate,
• hydrophobic as well as hydrophilic polyisocyanates in emulsifiable isocyanate resin,
• Particles of <1 micron as SiO or AIO in the aqueous polymer dispersion, for the overall strength of the product,
• emulsifiable amine hardeners in the emulsifiable polyamine adduct hardener.

6. Use of a system product according to one of the preceding claims for the protective treatment of mineral surfaces, plastics with porous surfaces, microporous floors and floor materials, i.e. floors and floor materials which have pores in the micrometer range, such as parquet, wood of all kinds, linoleum, rubber/rubber, PVC, polyurethane, epoxy, natural stones, limestone, concrete, anhydrite, cement filler and others.

7. Method for the gentle restoration, stabilisation and protective treatment of mineral surfaces, plastics with porous surfaces, microporous soils and soil materials, i.e. floors and floor materials with pores in the micrometer range, such as parquet, wood of all kinds, linoleum, rubber/rubber, PVC, polyurethane, epoxy, natural stones, limestone, concrete, anhydrite, cement filler and others, in which, after cleaning the surface to be treated, the floor or floor materials by means of commercially available cleaning agents and techniques, a system product is applied according to one of the preceding claims with the following steps
a) Plane grinding of the surface, floor or floor material by means of abrasives and machines to open the material surfaces and thus restore the microporosity and remove as much as possible of foreign particles from the surface material to be treated,
(b) Conditioning of the surface, soil or floor material by priming with component A of the System Product, whereby this component A penetrates into the surface material, soil or floor material and forms a network of docking points for chemical bonding of the subsequently applied component B of the System Product,
(c) Stabilising the surface, soil or floor material by application by rolling or brushing of component B of the system product, which component thereby penetrates and chemically bonds to the surface material, soil or floor material and envelops its individual substrate particles, thereby creating a permanently elastic micro-network.

8. The process according to claim 7, **characterized in that** the following step is then applied:
d) protective treatment of the surface, the soil or the soil material by means of single or multiple application by rolling or brushing of the component B of the system product, which component chemically bonds with the stabilised surface, the stabilised soil or soil material, by enveloping the remaining free substrate particles, thereby supplementing the permanently elastic network and creating a permanently elastic thin layer on the material surface.

9. Method for renewal of a sealant created according to claim 7 or 8 by sanding the old protective layer and re-applying component B according to the method.

10. Surface, floor or floor material treated for protection according to any of claims 7 to 9.

## Revendications

1. Produit système pour le traitement protecteur de surfaces minérales, de matières plastiques à surface poreuse, de sols et de matériaux de sol microporeux, c'est-à-dire de sols et de matériaux de sol dont les pores sont de l'ordre du micromètre, tels que parquet, bois de toutes sortes, linoléum, caoutchouc/caoutchouc, PVC, polyuréthane, époxy, pierres naturelles, calcaire, béton, anhydrite, mastic de ciment et autres, sous la forme d'une laque diluable à l'eau, constituée d'au moins deux composants A et B avec trois composants de base, à savoir
A un apprêt époxydique à deux composants diluable à l'eau, et
B d'une dispersion aqueuse de polymère ayant un pH compris entre 6 et 9 et d'une résine isocyanate émulsifiable,
où le composant B est exempt de polysiloxanes.

2. Produit de système selon la revendication 1, **caractérisé en ce que** le primaire époxydique à deux composants diluable à l'eau est composé de résine de bisphénol épichlorhydrine et d'un durcisseur de produit d'addition de polyamine émulsifiable.

3. Produit de système selon l'une des revendications précédentes, **caractérisé en ce que** le composant A, à savoir le primaire époxy à deux composants diluables à l'eau, est composé des deux composants suivants: résine de bisphénol épichlorhydrine et durcisseur de produit d'addition de polyamine émulsifiable,
la résine bisphénol-épichlorhydrine est composée de
5 à 100 % en poids de polymères,
5 à 100 % en poids de co-solvants,
1 à 40 % en poids d'additifs,
et le durcisseur émulsifiable de produit d'addition de polyamine de
5 à 100 % en poids de résine aminée,
5 à 100 % en poids de co-solvants,
5 à 100 % en poids d'eau,
et que la composition du constituant B est la suivante :
la dispersion aqueuse de polymère se compose de
90 à 40 % en poids d'eau,
5 à 40 % en poids de polymères,
1 à 40 % en poids d'additifs,
et la résine isocyanate émulsifiable est choisie parmi
5 à 100 % en poids de polyisocyanates,
5 à 100 % en poids de co-solvant.

4. Produit de système selon l'une des revendications précédentes, **caractérisé en ce que** la dispersion de polymère contient une dispersion de polyol et des co-liants sous la forme de dispersions de polymère réactives et non réactives, ainsi que des additifs pour favoriser l'écoulement, pour stabiliser la viscosité et pour démousser, en outre que dans la dispersion de polymère et la résine d'isocyanate, un co-solvant pour stabiliser le système de peinture est ajouté, ainsi que des additifs de cire pour améliorer la résistance à l'abrasion sont utilisés.

5. Produit du système selon l'une des revendications précédentes, **caractérisé en ce qu'**il contient en outre un ou plusieurs des additifs suivants
• Agent de matage pour le matage du sol scellé,
• Absorbeur d'UV pour protéger le revêtement et le substrat,
• des polyisocyanates hydrophobes et hydrophiles dans la résine isocyanate émulsifiable,
• Particules de <1 micromètre comme SiO ou AIO dans la dispersion aqueuse de polymère, à la force globale du produit,
• des durcisseurs amines émulsifiables dans le durcisseur adduct de polyamine émulsifiable.

6. Utilisation d'un produit système selon l'une des revendications précédentes pour le traitement protecteur de surfaces minérales, de matières plastiques à surface poreuse, de sols et de matériaux de sol microporeux, c'est-à-dire de sols et de matériaux de sol qui présentent des pores de l'ordre du micromètre, tels que le parquet, le bois de toutes sortes, le linoléum, le caoutchouc/caoutchouc, le PVC, le polyuréthane, l'époxy, les pierres naturelles, le calcaire, le béton, l'anhydrite, le mastic de ciment et autres.

7. Les méthodes de restauration, de stabilisation et de traitement protecteur en douceur des surfaces minérales, des matières plastiques à surface poreuse, des sols microporeux et des matériaux de sol, c'est-à-dire les sols et matériaux de sol présentant des pores de l'ordre du micromètre, tels que le parquet, les bois de toutes sortes, le linoléum, le caoutchouc/caoutchouc, le PVC, le polyuréthane, l'époxy, les pierres naturelles, le calcaire, le béton, l'anhydrite, le mastic de ciment et autres, dans lesquels, après avoir nettoyé la surface, le sol ou les matériaux de sol à traiter au moyen de produits et techniques de nettoyage disponibles dans le commerce, un produit de système est appliqué selon l'une des revendications précédentes avec les étapes suivantes:
a) Ponçage plan de la surface, du sol ou du matériau du sol au moyen d'abrasifs et de machines permettant d'ouvrir les surfaces du matériau et donc de restaurer la microporosité et d'éliminer les particules étrangères le plus possible du matériau de surface à traiter,
b) Conditionnement du matériau de surface, du sol ou du plancher par un apprêt au moyen du composant A du produit de système, ce composant A pénétrant dans le matériau de surface, le sol ou le plancher et formant un réseau de points d'ancrage pour la liaison chimique du composant B du produit de système appliqué ultérieurement,
c) Stabilisation de la surface, du sol ou du matériau de sol par application au rouleau ou au pinceau du composant B du produit du système, lequel composant pénètre et se lie chimiquement au matériau de surface, au sol ou au matériau de sol et enveloppe les particules individuelles de son substrat, créant ainsi un micro-réseau élastique permanent.

8. La méthode selon la revendication 7, **caractérisée en ce que** l'étape suivante est ensuite appliquée:
d) le traitement de protection de la surface, du sol ou du matériau du sol par application unique ou multiple, par roulement ou brossage, du composant B du produit du système, qui se lie chimiquement à la surface stabilisée, au sol stabilisé ou au matériau du sol, par revêtement des particules de substrat libres restantes, complétant ainsi le réseau élastique permanent et créant une fine couche élastique permanente à la surface du matériau.

9. Méthode de renouvellement d'un produit d'étanchéité créé selon la revendication 7 ou 8 en meulant l'ancienne couche de protection et en réappliquant le composant B selon la méthode.

10. Surface, sol ou matériau du sol traité pour la protection selon l'une des revendications 7 à 9.
